# EUROPEAN PATENT APPLICATION

(11) **EP 4 715 202 A1**
(43) Date of publication of application: **25.03.2026**
(21) Application number: 25201608.4
(22) Date of filing: 11.09.2025
(51) Int. Cl.: F03D 17/00

(54) **WIND TURBINE, METHOD OF ACQUIRING INFORMATION, AND WIND TURBINE MANAGEMENT SYSTEM**

(30) Priority: 18.09.2024 JP 2024161480
(71) Applicant: Nabtesco Corporation, Tokyo (JP)
(72) Inventor: Nohara, Osamu, Tokyo (JP)
(74) Representative: Grünecker Patent- und Rechtsanwälte PartG mbB

(57) **Abstract**

An aerial vehicle obtains information regarding the external condition of a wind turbine. The wind turbine includes a tower, a nacelle rotatably supported by the tower, and a wireless charging device provided in the nacelle for charging the aerial vehicle. The aerial vehicle charged by the wireless charging device can stably acquire information regarding the appearance of the wind turbine without being limited in an available flight time.

## Description

### CROSS-REFERENCE TO RELATED APPLICATIONS

This application is based on and claims the benefit of priority from Japanese Patent Application Serial No. 2024-161480 (filed on September 18, 2024), the contents of which are hereby incorporated by reference in its entirety.

### TECHNICAL FIELD

The present disclosure relates to a wind turbine, a method of acquiring information, and a wind turbine management system.

### BACKGROUND

As disclosed in Japanese Patent Application Publication No. 2017-020410 ("the '410 Publication"), a method of acquiring information regarding a wind turbine using an aerial vehicle is known. The aerial vehicle obtains information regarding the external condition of the wind turbine.

The aerial vehicle disclosed in the '410 Publication includes a storage battery for storing electric power used for flight. To obtain information regarding the wind turbine, the aerial vehicle requires electric power to travel back and forth between the wind turbine and a parking location. If the aerial vehicle secures sufficient electric power for such round-trip travel, the time available for flying to obtain the information is reduced.

### SUMMARY

One object of the present disclosure is to improve the efficiency of information acquisition regarding the wind turbine by the aerial vehicle. One aspect of the disclosure relates to providing a wind turbine including a contactless charging device for charging an aerial vehicle.

### ADVANTAGEOUS EFFECTS

According to the aspect of the disclosure, it is possible to improve the efficiency of acquisition of information regarding the wind turbine by the aerial vehicle.

### BRIEF DESCRIPTION OF THE DRAWINGS

Fig. 1 is a perspective view showing wind turbines, an aerial vehicle, and a building for explaining one embodiment of the present disclosure.
Fig. 2 is a perspective view of one of the wind turbines shown in Fig. 1.
Fig. 3 is a plan view of the wind turbine of Fig. 2.
Fig. 4 is a side view of the wind turbine of Fig. 2.
Fig. 5 is a schematic sectional view of a wind turbine driving device shown in Fig. 4.
Fig. 6 is a block diagram of the wind turbine.
Fig. 7 is a block diagram of a condition monitoring device.
Fig. 8 is a block diagram of a receiving unit of Fig. 7.
Fig. 9 is a block diagram of an instruction unit of Fig. 7.
Fig. 10 is a perspective view of a wireless charge device.
Fig. 11 is a block diagram of the wireless charge device.
Fig. 12 is a perspective view of an aerial vehicle.
Fig. 13 is a block diagram of the aerial vehicle.
Fig. 14 is a flowchart of a method of acquiring information regarding the wind turbine by the aerial vehicle.

### DESCRIPTION OF THE EMBODIMENTS

An embodiment of the disclosure relates to the following items (1) to (20).
(1) A wind turbine including a wireless charging device for charging an aerial vehicle.
(2) The wind turbine described in the item (1), further including a tower; and a nacelle rotatably supported on the tower, wherein the nacelle is provided with a port for the aerial vehicle to land, and the wireless charging device is disposed at the port.
(3) The wind turbine described in the item (2), wherein the port is situated on a portion of the nacelle that overlaps with the tower.
(4) The wind turbine described in the item (2) or (3), wherein the port is disposed in a recess formed in the nacelle.
(5) The wind turbine described in any one of the items (1) to (4), further including an appearance receiving unit configured to receive a signal related to the external condition of the wind turbine from the aerial vehicle.
(6) The wind turbine described in the item (5), further including a transmission unit configured to transmit the signal received by the appearance receiving unit.
(7) The wind turbine described in the (6), further including: a sensor detecting an operation of the wind turbine; and a sensor receiving unit receiving a signal related to a detection result from the sensor, wherein the transmission unit transmits the signal received by the appearance receiving unit and the signal received by the sensor receiving unit.
(8) The wind turbine described in any one of the items (5) to (7), further including a transmission instruction unit instructing the aerial vehicle to transmit, to the wind turbine, the signal related to the external condition of the wind turbine.
(9) The wind turbine described in any one of the items (2) to (8), further including: an appearance receiving unit receiving, from the aerial vehicle, a signal related to the external condition of the wind turbine; and a transmission instruction unit instructing the aerial vehicle to transmit, to the wind turbine, the signal related to the external condition of the wind turbine, wherein the transmission instruction unit instructs the aerial vehicle to transmit the signal related to the external condition of the wind turbine to the wind turbine when the aerial vehicle is landed on the port.
(10) The wind turbine described in any one of the items (1) to (9), further including: a time receiving unit receiving, from the aerial vehicle, a signal related to an available flight time; and a flight instruction unit instructing the aerial vehicle to fly, wherein the flight instruction unit instructs the aerial vehicle to fly based on the signal received by the time receiving unit.
(11) The wind turbine described in the item (10), further including: a sensor detecting an operation of the wind turbine; and a sensor receiving unit receiving a signal regarding a detection result from the sensor, wherein the flight instruction unit instructs the aerial vehicle to fly based on the signal received by the sensor receiving unit.
(12) A method of acquiring the condition of the wind turbine described in any one of the items (1) to (10), the method including: a charging step of charging the aerial vehicle by the wireless charging device; and an acquisition step of acquiring information regarding the wind turbine by the aerial vehicle.
(13) The method described in the item (12), wherein the aerial vehicle includes a storage unit for storing information regarding the appearance of the wind turbine in the acquisition step, and the method further includes: a communication step of transmitting the information regarding the appearance stored in the storage unit after the acquisition step; and a deletion step of deleting the information regarding the appearance from the storage unit.
(14) A wind turbine management system including: a condition monitoring device for monitoring a state of a wind turbine; and a wireless charging device provided in a nacelle of the wind turbine for charging an aerial vehicle.
(15) The wind turbine management system described in the item (14), wherein the condition monitoring device includes an appearance receiving unit receiving a signal related to an external condition of the wind turbine from the aerial vehicle.
(16) The wind turbine management system described in the item (15), wherein the condition monitoring device includes a transmission unit transmitting the signal received by the appearance receiving unit.
(17) The wind turbine management system described in any one of the items (14) to (16), further including a sensor detecting an operation of the wind turbine, wherein the condition monitoring device includes a sensor receiving unit receiving a signal related to a detection result from the sensor, and the transmission unit transmits the signal received by the appearance receiving unit and the signal received by the sensor receiving unit.
(18) The wind turbine management system described in any one of the items (14) to (17), wherein the condition monitoring device includes a transmission instruction unit that instructs the aerial vehicle to transmit the signal regarding an external condition of the wind turbine to the wind turbine.
(19) The wind turbine management system described in any one of the items (14) to (18), wherein the condition monitoring device includes: a time receiving unit receiving, from the aerial vehicle, a signal related to an available flight time; and a flight instruction unit instructing the aerial vehicle to fly, wherein the flight instruction unit instructs the aerial vehicle to fly based on the signal received by the time receiving unit.
(20) The wind turbine management system described in any one of the items (14) to (19), further including a sensor that detects an operation of the wind turbine, wherein the condition monitoring device includes a sensor receiving unit receiving a signal related to a detection result from the sensor, wherein the flight instruction unit instructs the aerial vehicle to fly based on the signal received by the sensor receiving unit.

An embodiment of the disclosure will be described hereinafter with reference to the appended drawings. From the standpoint of facilitating illustration and understanding, dimensional ratios in the drawings may be modified from those of the actual components. Certain components shown in one drawing may be omitted in other drawings.

Terms used to specify geometric conditions such as shape, "parallel," and "orthogonal," as well as values of length, are to be interpreted not in a strictly literal sense, but to include ranges that can be expected to provide similar functionality.

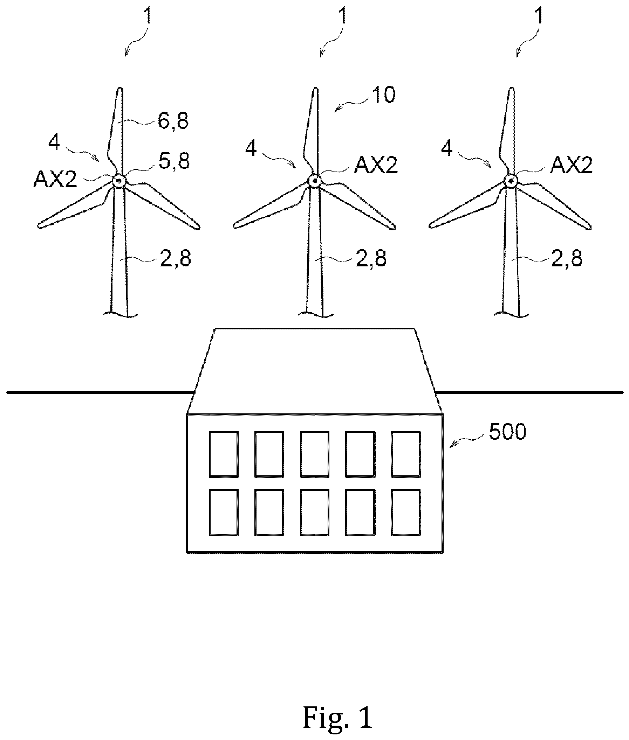

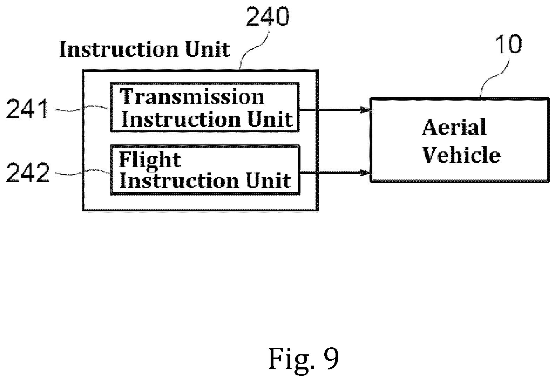

Figs. 1 to 14 are provided for describing one embodiment of the present disclosure. Fig. 1 illustrates a wind turbine 1, an aerial vehicle 10, and a building 500. The wind turbine 1 is unmanned. The wind turbine 1 is installed outdoors. The wind turbine 1 may be installed on land or over water. Fig. 1 shows a plurality of wind turbines 1 installed over water. The wind turbines 1 over the water surface may be installed in the sea or in a lake. The wind turbines 1 over the water surface may be installed along the shore or offshore. The way the wind turbines 1 are installed over the water surface may be of a bottom-fixed type or a floating type.

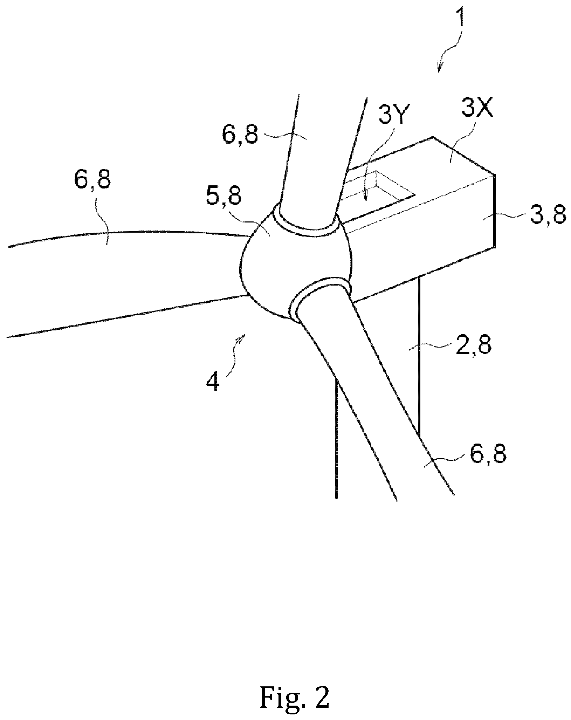

As shown in Fig. 2, the wind turbine 1 includes a tower 2, a nacelle 3 rotatably supported on the tower 2, and a rotor 4 rotatably supported on the nacelle 3. The rotor 4 includes a hub 5 and a plurality of blades 6 extending radially from the hub 5. The wind turbine 1 generates electricity through rotation of the rotor 4.

In the wind turbine 1 shown in Fig. 2, the tower 2, nacelle 3, hub 5, and blades 6 are exterior members 8 of the wind turbine 1. The exterior members 8 may be painted. In other words, the exterior members 8 may include a base material and a coating film covering the base material. The coating film protects the base material from external environmental conditions. From the standpoint of ensuring strength against the external environments, the base material of the exterior members 8 may be made of steel.

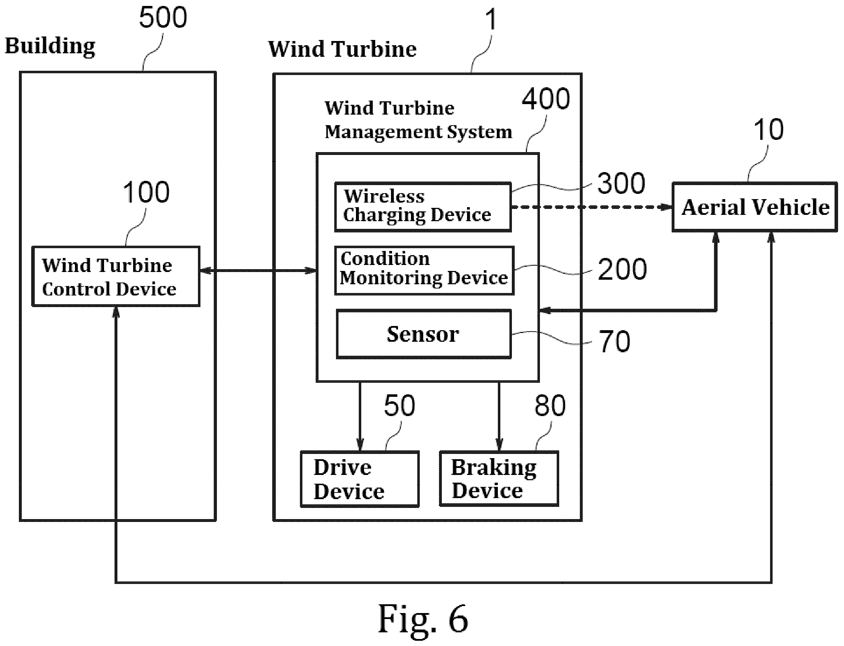

The operation of each of the plurality of wind turbines 1 shown in Fig. 1 may be remotely controlled by a wind turbine control device 100. As shown in Fig. 6, the wind turbine control device 100 is installed in the building 500. The building 500 of Fig. 1 is situated at a location remote from the wind turbines 1. The building 500 is built on land. The wind turbine control device 100 may control rotation of the rotor 4, rotation of the nacelle 3 relative to the tower 2, and rotation of the blades 6 relative to the hub 5. Details regarding the rotation of the nacelle 3 relative to the tower 2 and the rotation of the blades 6 relative to the hub 5 will be described later. However, the wind turbine control device 100 may alternatively be installed in the wind turbine 1, unlike the example shown in Fig. 6.

The wind turbine control device 100 is a computer. The computer includes a control circuit. The control circuit may include a processor such as a CPU (Central Processing Unit) and an MPU (Micro Processing Unit). The control circuit may include a main storage device such as a RAM (Random Access Memory). The control circuit may include an auxiliary memory device such as a ROM (Read Only Memory) or a hard disk.

The aerial vehicle 10 in Fig. 1 is flying around the wind turbines 1. While in flight, the aerial vehicle10 is moving around the wind turbines 1. Herein, "movement" or "moving" of the aerial vehicle 10 refers to an action that involves displacement of the center of gravity of the aerial vehicle 10. The aerial vehicle 10 is unmanned. The aerial vehicle 10 may be a drone. The aerial vehicle 10 flies using electric power supplied from an internal storage battery 15. The storage battery 15 is a rechargeable battery that can be repeatedly used. The aerial vehicle 10 is charged by supplying electric power to the storage battery 15 from an external power source.

The aerial vehicle obtains information regarding the external condition of the wind turbine 1. Hereinafter, the information regarding the external condition of the wind turbine 1 is also referred to as appearance information of the wind turbine 1. The aerial vehicle 10 may acquire the appearance information of the plurality of wind turbines 1. The appearance information of the wind turbine 1 may be an image of the exterior member(s) 8. That is, the aerial vehicle 10 may capture an image of the exterior member(s) 8. The image captured by the aerial vehicle 10 may be a still image or a moving image.

The appearance information of the wind turbine 1 is used to detect abnormalities in the exterior member 8. Abnormalities in the exterior member 8 may include deterioration of the exterior member 8. As an example, deterioration of the exterior member 8 may include cracks in the coating on the blade 6 or peeling of the coating. Detection of the deterioration of the exterior member 8 allows early measures can be taken early to prevent malfunctions in the wind turbine 1. Deterioration of the exterior member 8 may be detected based on the appearance information of the wind turbine 1 by a condition monitoring device 200 described below, or it may be detected by the aerial vehicle 10.

The aerial vehicle 10 may obtain the appearance information of the wind turbine 1 in response to instructions from the wind turbine control device 100. The aerial vehicle 10 may obtain the appearance information of the wind turbine 1 in response to instructions from the condition monitoring device 200 described below. The aerial vehicle 10 may determine by itself to obtain the appearance information of the wind turbine 1. The appearance information of the wind turbine 1 may be obtained by the wind turbine control device 100 or by the condition monitoring device 200. The appearance information of the wind turbine 1 may be transmitted wirelessly to the condition monitoring device 200 as a signal. The wind turbine control device 100 may obtain the appearance information of the wind turbine 1 via the condition monitoring device 200. The wind turbine control device 100 and the condition monitoring device 200 may be interconnected through wired communication.

In Fig. 1, when the aerial vehicle 10 does not obtain the appearance information of the wind turbine 1, it may be housed in the building 500 in which the wind turbine control device 100 is installed. In other words, the building 500 may serve as a parking location for the aerial vehicle 10. The aerial vehicle 10 may be charged in the building 500. Before starting the acquisition of the appearance information of the wind turbine 1, the aerial vehicle 10 housed in the building 500 moves from the building 500 toward the wind turbine 1. After completing the acquisition of the appearance information of the wind turbine 1, the aerial vehicle 10 moves from the wind turbine 1 toward the building 500.

The wind turbine 1 may be situated at a distance from the parking location of the aerial vehicle 10 that exceeds the maximum transmission range of the aerial vehicle 10. The maximum transmission range of the aerial vehicle 10 refers to the maximum distance over which the aerial vehicle 10 can wirelessly transmit signals. When the wind turbine 1 is situated farther from the parking location than the maximum transmission range of the aerial vehicle 10, the aerial vehicle 10 cannot wirelessly transmit signals to its parking location. The aerial vehicle 10 may be situated at a distance from its parking location that does not exceed a flying range of the aerial vehicle 10. The flying range of the aerial vehicle 10 refers to the maximum distance the aerial vehicle 10 can fly without recharging.

When acquiring the appearance information of the multiple wind turbines 1 as shown in Fig. 1, the multiple aerial vehicles 10 may be used. The multiple aerial vehicles 10 may obtain the appearance information of different wind turbines 1, respectively.

As described in the background, the aerial vehicle requires electric power to travel between its parking location and the wind turbine. As shown in Fig. 1, when the wind turbine is installed over water, insufficient electric power for the aerial vehicle to travel between the parking location and the wind turbine may result in the aerial vehicle falling into the water. However, when the aerial vehicle secures sufficient electric power to travel between the parking location and the wind turbine may reduce the amount of electric power available for the aerial vehicle to fly for the purpose of acquiring the appearance information. As a result, the time during which the aerial vehicle can fly to obtain the appearance information of the wind turbine may be reduced due to the travel between the parking location and the wind turbine.

In contrast, the wind turbine 1 of the embodiment includes a wireless charging device 300 for charging the aerial vehicle 10. Specifically, as will be described later, electric power is wirelessly supplied from a power transmission unit 303 included in the wireless charging device 300 to a power receiving unit 16 included in the aerial vehicle 10.

The wireless charging device 300 is capable of charging the aerial vehicle 10 that has traveled from the building 500 to the wind turbine 1. This allows the aerial vehicle 10 to extend its flying time for acquiring the appearance information of the wind turbine 1. The wireless charging device 300 may charge the aerial vehicle 10 before the aerial vehicle 10 obtains the appearance information of the wind turbine 1. The wireless charging device 300 may also charge the aerial vehicle 10 after the aerial vehicle 10 obtained the appearance information of the wind turbine 1 and before the aerial vehicle 10 returns to the building 500, which serves as the parking location.

Furthermore, by wirelessly charging the aerial vehicle 10 using the wireless charging device 300, it is unnecessary for a person to perform charging operations for the aerial vehicle 10 at the wind turbine 1. The aerial vehicle 10 can be charged at the unmanned wind turbine 1. Deploying personnel to the wind turbine 1 for charging operations is difficult. As shown in Fig. 1, when the multiple wind turbines 1 are installed, or when the wind turbine 1 is disposed above water, the deployment of personnel is particularly difficult. Accordingly, wireless charging of the aerial vehicle 10 by the wireless charging device 300 is especially suitable in the both cases where the aerial vehicle 10 obtains the appearance information of the multiple wind turbines 1 and obtains the appearance information of the wind turbines 1 disposed over water.

The charging method for the aerial vehicle 10 by the wireless charging device 300 is not particularly limited, provided that wireless power transmission is possible. As one example, the charging method for the aerial vehicle 10 by the wireless charging device 300 may be an electromagnetic induction method or an electric field coupling method.

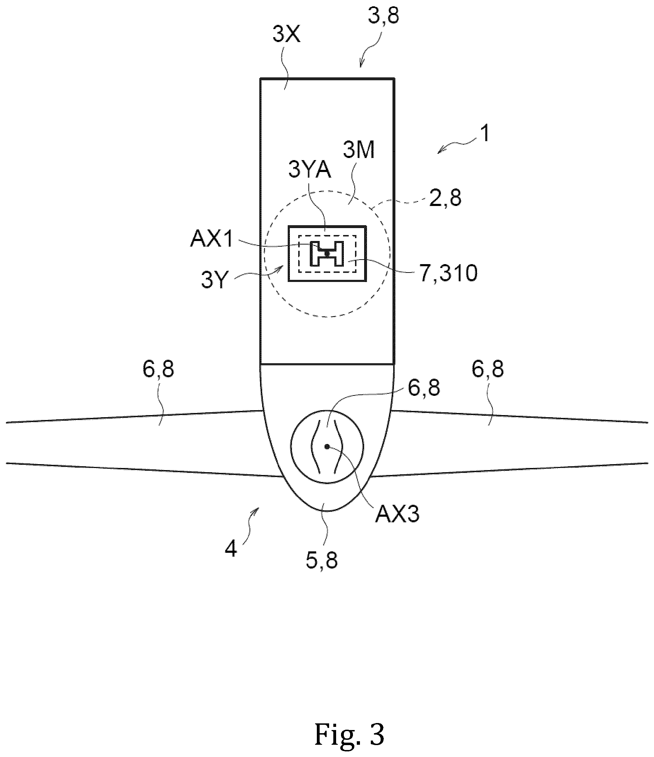

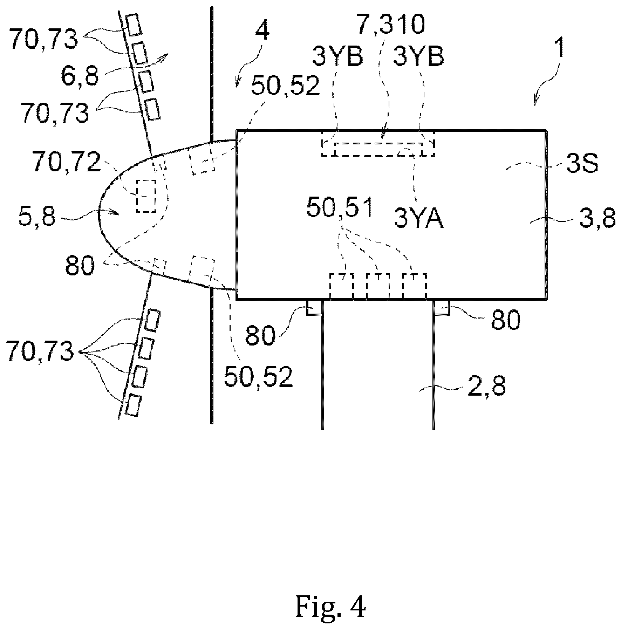

The following is a more detailed description of the configuration of the wind turbine 1, mainly referring to Figs. 1 to 11. Fig. 3 is a plan view of the wind turbine 1, showing the wind turbine 1 as viewed from above in the vertical direction. Fig. 4 is a side view of the wind turbine 1, showing the wind turbine 1 as viewed from the horizontal direction.

In the wind turbine 1 of Fig. 1, the tower 2 is installed so as to extend upward from the water surface. In the context of the wind turbine 1 installed over water, the term "upward" refers to a direction away from the water surface in the vertical axis.

The nacelle 3 shown in Figs. 2 and 3 is rotatable relative to the tower 2 about a first axis that extends parallel to the longitudinal direction of the tower 2. In other words, the first axis AX1 serves as the rotational axis of the nacelle 3 with respect to the tower 2. The illustrated first axis AX1 extends in a direction parallel to the vertical direction. The nacelle 3 may rotate relative to the tower 2 in response to changes in wind direction. The rotation of the nacelle 3 about the first axis AX1 may be referred to as yaw rotation of the wind turbine 1.

As shown in Fig. 4, an internal space 3S is formed within the nacelle 3. Although not illustrated, the internal space 3S accommodates a rotary shaft member of the rotor 4, a speed increaser configured to increase the rotational motion of the rotary shaft member, a rotor brake configured to decelerate or stop the rotation of the rotor 4 relative to the nacelle 3, and a generator, and the like.

The nacelle 3 shown in Figs. 2 and 3 has a rectangular parallelepiped shape. The nacelle 3 includes a top surface 3X. The top surface 3X extends in a direction orthogonal to the longitudinal direction of the tower 2. In Fig. 3, the top surface 3X extends in a horizontal direction orthogonal to the vertical direction. A port 7 where the aerial vehicle 10 is to land is provided on the top surface 3X.

The wireless charging device 300 is provided at the port 7 shown in Figs. 2 and 3. The illustrated wireless charging device 300 charges the aerial vehicle 10 at the port 7. The aerial vehicle 10 may be charged by the wireless charging device 300 while the aerial vehicle 10 is landed on the port 7, i.e., while it stopped flying at the port 7. The aerial vehicle 10 may be charged by the wireless charging device 300 when it approaches the port 7 during flight.

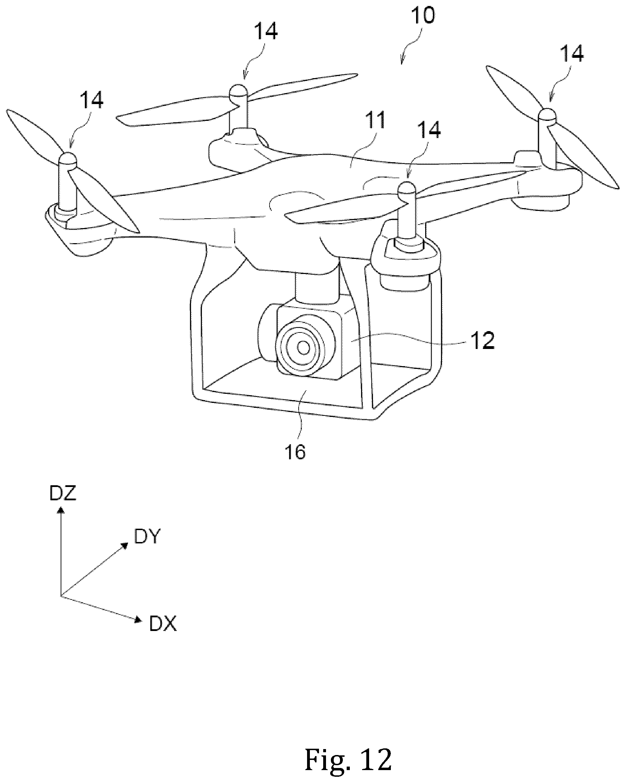

As shown in Figs. 2 to 4, a recess 3Y may be provided on the top surface 3X of the nacelle 3. The recess 3Y is a portion that is recessed toward the tower 2 relative to other portions of the top surface 3X. In Fig. 3, the above-described port 7 is disposed in the recess 3Y. The recess 3Y may include a bottom portion 3YA extending in the horizontal direction, and side portions 3YB extending upward from the bottom portion 3YA. As shown in Fig. 4, the bottom portion 3YA may serve as the port 7. The height of the side portion 3YB, that is, the dimension in the vertical direction, may be greater than the overall height of the aerial vehicle 10. The overall height of the aerial vehicle 10 refers to the overall length of the aerial vehicle 10 in the Z direction DZ shown in Fig. 12.

As shown in Fig. 3, when the wind turbine 1 is viewed from a direction parallel to the first axis AX1, the nacelle 3 has an overlapping portion 3M that overlaps with the tower 2. In Fig. 3, the first axis AX1 is situated in the overlapping portion 3M. The overlapping portion 3M includes a portion that serves as the center of the yaw rotation of the wind turbine 1. In Fig. 3, the overlapping portion 3M is indicated by a circular broken line. The port 7 of Fig. 3 is situated on the overlapping portion 3M. However, the port 7 may alternatively be situated on a portion other than the overlapping portion 3M, contrary to the example shown in Fig. 3.

The rotor 4 of Fig. 1 is rotatable relative to the nacelle 3 about a second axis AX2 that extends parallel to the horizontal direction. The plurality of blades 6 extend radially from the hub 5 in a direction orthogonal to the second axis AX2. The plurality of blades 6 are arranged such that, when viewed from the front, which is from a direction parallel to the rotational axis of the rotor 4 (the second axis AX2), the angle between any two adjacent blades 6 is equal. Figs. 1 and 2 show the three blades 6 arranged such that the angle between any two adjacent blades 6 is equal when viewed from the front. The movement speed of each blade 6 during rotation of the rotor 4 relative to the nacelle 3 increases as the portion of the blade is situated closer to its tip, that is, as the portion is situated away from the hub 5.

As shown in Fig. 3, the blades 6 may be rotatable relative to the hub 5 about a third axis line AX3 parallel to the longitudinal direction of the blade 6. The blades 6 may rotate relative to the hub 5 in response to changes in wind speed, or the like. The blades 6 may rotate relative to the hub 5 for the purpose of controlling the rotational speed of the rotor 4 relative to the nacelle 3, controlling power generation, or the like. Such rotation of the blades 6 relative to the hub 5 may be referred to as a pitch rotation of the wind turbine 1.

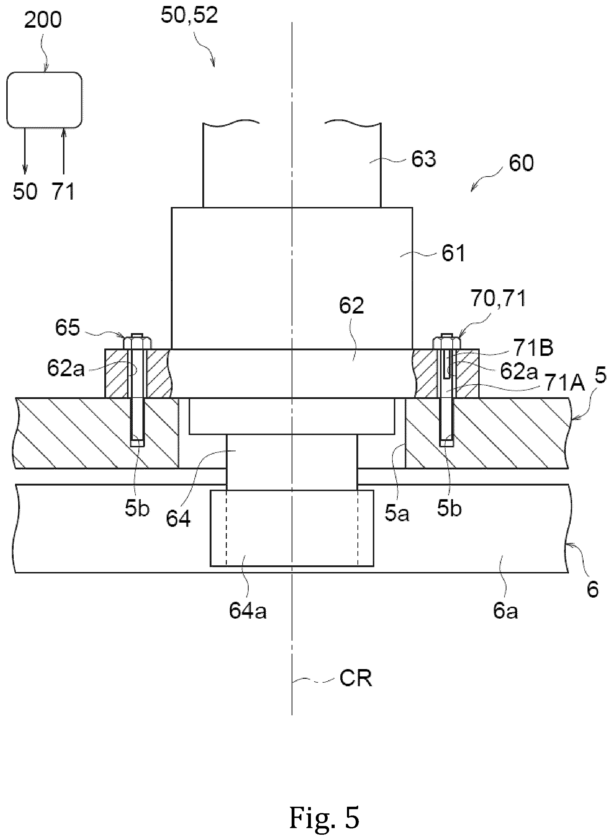

The wind turbine 1 includes a drive device 50 for the yaw rotation or pitch rotation. The wind turbine 1 of Fig. 4 includes a first drive device 51 for the yaw rotation and a second drive device 52 for the pitch rotation. The first drive device may be referred to as a yaw drive device. The second drive device 52 may be referred to as a pitch drive device. The first drive device 51 is attached to the nacelle 3. The second drive device 52 is attached to the hub 5. The number of the second drive devices 52 may be greater than the number of the blades 6 in order to rotate each of the multiple blades 6 relative to the hub 5. The wind turbine 1 shown in Figs. 1 and 2 may include three second drive devices 52 to rotate each of the three blades 6 relative to the hub 5. The following specifically describes the configuration of the drive device 50 using the second drive device 52 of Fig. 5 as an example.

The drive device 50 (second drive device 52) of Fig. 5 includes a drive device body 60 and a plurality of bolts 65 that fix the drive device body 60 to the hub 5. The drive device body 60 of Fig. 5 includes an output shaft 64 having a meshing portion 64a, a casing 61 that rotatably supports the output shaft 64, and an electric motor 63 fixed to the casing 61. The output shaft 64 in Fig. 5 is rotatably supported by the casing 61 about a rotational axis CR. In Fig. 5, the meshing portion 64a extends into a through-hole 5a formed in the hub 5 and engages with a ring gear 6a provided in the blade 6. Note that in Fig. 5, individual teeth of the ring gear 6a are omitted from illustration.

The casing 61 of Fig. 5 is cylindrical in shape. The longitudinal direction of the casing 61 is parallel to the direction in which the rotational axis CR of the output shaft 64 extends. Both end portions of the casing 61 in the longitudinal direction are open. From one of the two openings, the output shaft 64 and the meshing portion 64a are exposed. The electric motor 63 is mounted at the other of the two openings.

The casing 61 of Fig. 5 includes a flange portion 62. The flange portion 62 is situated at an end of the drive device body 60 in the axial direction, that is, in a direction parallel to the rotational axis CR. At the flange portion 62, the casing 61 is in contact with the hub 5. At the portion where the casing 61 contacts the hub 5, the hub 5 is disposed between the drive device body 60 and the blade 6. As shown in Fig. 5, in a direction orthogonal to the rotational axis CR, the dimension of the flange portion 62 is greater than that of the other portions. The flange portion 62 is annular about the rotational axis CR of the output shaft 64. The outer diameter of the flange portion 62 is greater than the outer diameter of the through-hole 5a formed in the hub 5. Accordingly, the flange portion 62 cannot pass through the through-hole 5a in the hub 5.

A plurality of through-holes 62a are formed in the flange portion 62 of Fig. 5. The through-holes 62a extend in a direction parallel to the rotational axis CR of the output shaft 64. The plurality of through-holes 62a are formed and arranged along the circumference centered on the rotational axis CR. As shown in Fig. 5, the through-holes 62a receive the bolts 65 for fixing the drive device body 60 to the hub 5.

The output shaft 64 of Fig. 5 includes a portion housed in the casing 61 and a portion extending from the casing 61. The output shaft 64 has the aforementioned meshing portion 64a at its tip portion in the extending direction from the casing 61. The meshing portion 64a may have various shapes for meshing with the ring gear 6a. As an example, the meshing portion 64a may be a pinion gear having external teeth that mesh with the internal teeth of the ring gear 6a.

The bolt 65 of Fig. 5 has a threaded portion. The bolt 65 is inserted in the through-hole 62a in the flange portion 62. The threaded portion of the bolt 65 meshes with a threaded hole 5b formed in the hub 5. By engaging the threaded portion of bolt 65 with threaded hole 5b, the bolt 65 fixes the drive device body 60 to the hub 5.

The wind turbine 1 includes a sensor 70 for detecting abnormalities in the wind turbine 1. The sensor 70 may be a bolt-type sensor device 71. The bolt-type sensor device 71 detects the load on the drive device 50, particularly the drive device body 60. As shown in Fig. 5, the bolt-type sensor device 71 is used to secure the drive device body 60 to the hub 5, replacing some of the bolts 65. The wind turbine 1 may include the multiple bolt-type sensor devices 71.

The bolt-type sensor device 71 of Fig. 5 includes a bolt-type sensor body 71A and a physical change detection unit 71B joined to the sensor body 71A. The sensor body 71A includes a threaded portion. The sensor body 71A is inserted in the through-hole 62a formed in the flange portion 62. The threaded portion of the sensor body 71A meshes with the threaded hole 5b in the hub 5. By meshing the threaded portion of the sensor body 71A with the threaded hole 5b, the sensor body 71A, together with the bolt 65, fixes the drive device body 60 to the hub 5.

The physical change detection unit 71B detects changes in the state of the drive device body 60 as physical changes in the sensor body 71A. The physical change detection unit 71B may detect tensile deformation, compressive deformation, bending deformation, torsional deformation, shear deformation, and the like of the sensor body 71A. In the bolt-type sensor device 71 of Fig. 5, the physical change detection unit 71B is disposed in the through-hole 62a formed in the flange portion 62.

The physical change detection unit 71B may be a strain sensor. In the bolt-type sensor device 71 of Fig. 5, the electrical resistance of the strain sensor changes in response to deformation of the portion of the sensor body 71A to which the strain sensor is joined. The strain sensor is capable of detecting changes in the electrical resistance as information related to the operation of the drive device body 60. However, the physical change detection unit 71B is not limited to such a strain sensor. The physical change detection unit 71B may alternatively be a position sensor, an ultrasonic distance meter, a capacitive distance meter, an optical distance sensor, or a displacement sensor.

As shown in Fig. 4, the sensor 70 may be an acoustic sensor 72. The acoustic sensor 72 is installed in the hub 5. The acoustic sensor 72 measures the waveform of sound generated during rotation of the rotor 4 relative to the nacelle 3. In other words, the acoustic sensor 72 measures the operating sound of the rotor 4. When the exterior member 8, particularly the rotor 4, deteriorates, the rotor 4 may generate a sound that differs from normal when it rotates relative to the nacelle 3. By comparing the sound waves measured by the acoustic sensor 72 between normal and abnormal conditions, deterioration of the rotor 4 can be detected.

As shown in Fig. 4, the sensor 70 may be an acceleration sensor 73. The illustrated acceleration sensor 73 is joined to the blade 6. The acceleration sensor 73 measures acceleration input to the blade 6 from the external environment. In the wind turbine 1, the acceleration sensor 73 can measure impacts on the exterior member 8 such as lightning strikes or collisions with foreign objects as acceleration.

As shown in Fig. 4, the wind turbine 1 includes a braking device 80 for decelerating or stopping the yaw rotation. The braking device 80 for decelerating or stopping the yaw rotation may also be referred to as a yaw brake. The above-described wind turbine control device 100 may control the yaw rotation of the wind turbine 1 by controlling the operation of the drive device 50 and the braking device 80. The wind turbine control device 100 may transmit signals related to the control of the drive device 50 and the braking device 80 to the wind turbine 1.

As shown in Fig. 6, the wind turbine 1 includes a condition monitoring device 200. The condition monitoring device 200 monitors the condition of the wind turbine 1, that is, whether any abnormalities are present in the wind turbine 1. The illustrated condition monitoring device 200 monitors the condition of the drive device 50 and the exterior member 8 as the condition of the wind turbine 1. The condition monitoring device 200 may also monitor the condition of the aerial vehicle 10. A wind turbine management system 400 may include the condition monitoring device 200 and the wireless charging device 300. The wind turbine management system 400 may further include the above-described sensor 70.

The condition monitoring device 200 may provide information regarding the condition of the wind turbine 1 to the wind turbine control device 100. The wind turbine control device 100 may obtain information regarding the condition of the wind turbine 1 by receiving a signal from the condition monitoring device 200. The wind turbine control device 100 may control the operation of the wind turbine 1 based on the information obtained from the condition monitoring device 200.

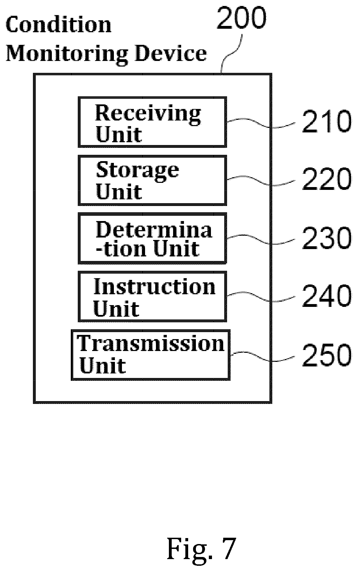

The condition monitoring device 200, like the wind turbine control device 100, is a computer. The condition monitoring device 200 is installed in the internal space 3S of the nacelle 3. As shown in Figs. 6 and 7, the condition monitoring device 200 includes, as functional components, a receiving unit 210, a storage unit 220, a determination unit 230, an instruction unit 240, and a transmission unit 250.

In Figs. 6, 8, 11, and 13, a solid arrow with one pointed end indicates signal transmission from a component connected to the non-pointed end to a component connected to the pointed end. In Figs. 6, 8, 11, and 13, a solid arrow with both ends pointed indicates that signal transmission and reception are performed between the two components connected by the arrow.

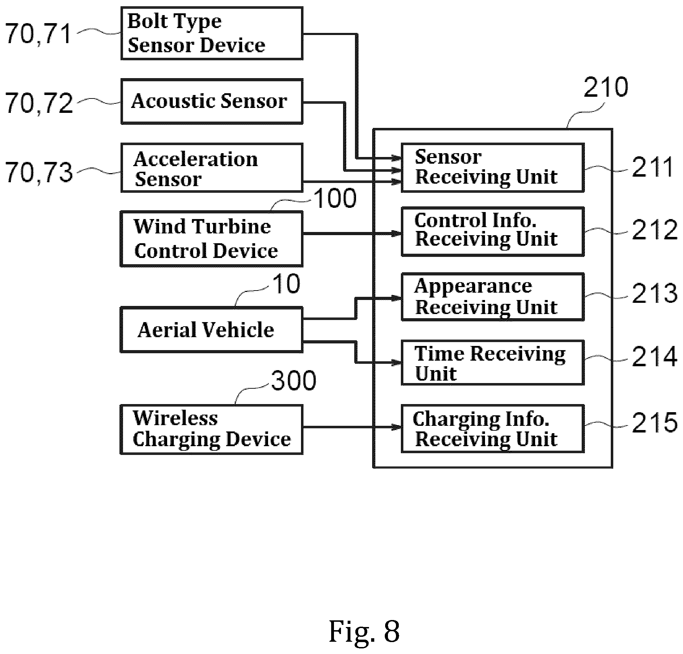

The receiving unit 210 receives signals from external units and devices. As shown in Figs. 7 and 8, the receiving unit 210 includes a sensor receiving unit 211, a control information receiving unit 212, and an appearance receiving unit 213. The sensor receiving unit 211, the control information receiving unit 212, and the appearance receiving unit 213 receive signals related to the wind turbine 1.

The sensor receiving unit 211 receives a signal regarding a detection result from the sensor 70. As shown in Fig. 8, the sensor receiving unit 211 receives, as the detection result, a signal related to the condition of the wind turbine 1 from the sensor 70. The sensor receiving unit 211 may receive, from the bolt-type sensor device 71, a change amount in electrical resistance of the physical change detection unit 71B as a deformation amount of the sensor body 71A. The sensor receiving unit 211 may receive, from the acoustic sensor 72, a signal related to the operating sound of the rotor 4. The sensor receiving unit 211 may receive, from the acceleration sensor 73, a signal related to a load applied to the blade 6.

The control information receiving unit 212 receives the signal related to the control of the wind turbine 1 from the wind turbine control device 100. The signal related to the control of the wind turbine 1 may include a signal related to the yaw rotation of the wind turbine 1 and/or a signal related to the pitch rotation of the wind turbine 1. The signal related to the yaw rotation of the wind turbine 1 may include signals related to the operation of the yaw drive device (first drive device 51) and/or the yaw brake. The signal related to the pitch rotation of the wind turbine 1 may include signals related to the operation of the pitch drive device (second drive device 52) and/or the pitch brake.

The control information receiving unit 212 may receive, from the wind turbine control device 100, a signal related to flight instructions for the aerial vehicle 10.

The appearance receiving unit 213 receives a signal related to the external condition of the wind turbine 1 from the aerial vehicle 10. When the appearance receiving unit 213 is receiving the signal related to the external condition of the wind turbine 1, the aerial vehicle 10 is transmitting the signal related to the external condition of the wind turbine 1 to the condition monitoring device 200. The signal received by the appearance receiving unit 213 from the aerial vehicle 10 may include a signal related to an image(s) of the exterior member 8. The signals received by the appearance receiving unit 213 from the aerial vehicle 10 may include signals related to the presence or absence of deterioration of the exterior member 8.

As shown in Figs. 7 and 8, the receiving unit 210 further includes a time receiving unit 214 and a charging information receiving unit 215. The time receiving unit 214 and the charging information receiving unit 215 receive signals related to the aerial vehicle 10. The time receiving unit 214 receives a signal related to the available flight time from the aerial vehicle 10. The signal related to the available flight time may include, as one example, an available flight time of the aerial vehicle 10 expressed in units such as seconds, minutes, or hours. As another example, the signal related to the available flight time may include a numerical value related to the electric power of the storage battery 15. The unit of the numerical value related to the electric power of the storage battery 15 is percent (%). The illustrated charging information receiving unit 215 receives a signal related to the position of the aerial vehicle 10 from the communication unit 308 of the wireless charging device 300.

As described above, the wireless charging device 300 is disposed at the port 7. The appearance receiving unit 213 and the time receiving unit 214 may receive signals from the aerial vehicle 10 when the aerial vehicle 10 has landed on the port 7. The appearance receiving unit 213 and the time receiving unit 214 may receive signals from the aerial vehicle 10 when the aerial vehicle 10 is flying and approaching the port 7. The charging information receiving unit 215 may receive, as the signal related to the position of the aerial vehicle 10, a result of detection for the landing of the aerial vehicle 10 at the port 7 from the wireless charging device 300.

The storage unit 220 stores information related to the condition of the wind turbine 1. The storage unit 220 may store the signal related to the condition of the wind turbine 1 received by the sensor receiving unit 211. The storage unit 220 may store the signal related to the external condition of the wind turbine 1 received by the appearance receiving unit 213. The storage unit 220 may store information necessary for determination of the condition of the wind turbine 1 by the determination unit 230.

The determination unit 230 determines whether there is an abnormality in the wind turbine 1. The determination unit 230 may determine the presence or absence of an abnormality in the wind turbine 1 based on a signal(s) received by the sensor receiving unit 211. As an example of the abnormality in the wind turbine 1, the determination unit 230 may determine an abnormal shutdown of the drive device 50, that is, an unintended stoppage of the drive device 50 when the drive device is expected to operate. The determination unit 230 may determine the abnormal shutdown of the drive device 50 by comparing the deformation amount data of the sensor body 71A received by the sensor receiving unit 211 with a threshold value of the deformation amount of the sensor body 71A stored in the storage unit 220. The determination unit 230 may determine the abnormal shutdown of the drive device 50 by comparing the deformation amount data of the sensor body 71A received by the sensor receiving unit 211 with past deformation amount data of the sensor body 71A stored in the storage unit 220.

The determination unit 230 may determine, based on a signal received by the sensor receiving unit 211, that deterioration of the exterior member 8 is suspected as the abnormality in the wind turbine 1. The determination unit 230 may determine that acquisition of the appearance information of the wind turbine 1 by the aerial vehicle 10 is necessary when deterioration of the exterior member 8 is suspected. Accordingly, the determination unit 230 may determine, based on the signal received by the sensor receiving unit 211, whether acquisition of the appearance information of the wind turbine 1 by the aerial vehicle 10 is necessary. The determination unit 230 may determine that deterioration of the wind turbine 1 is suspected, based on a comparison between reception data regarding the operating sound of the rotor 4 received by the sensor receiving unit 211 and a threshold regarding the operating sound of the rotor 4 stored in the storage unit 220. The determination unit 230 may determine that deterioration of the wind turbine 1 is suspected, based on a comparison between the data regarding load input to the blade 6 received by the sensor receiving unit 211 and a threshold regarding the load stored in the storage unit 220.

The determination unit 230 may determine whether the aerial vehicle 10 is allowed to fly based on a signal received by the time receiving unit 214. The determination unit 230 may determine whether the aerial vehicle 10 is allowed to fly based on a signal received by the time receiving unit 214. The determination unit 230 may determine whether the aerial vehicle 10 is allowed to fly by comparing the available flight time of the identified aerial vehicle 10 with a threshold regarding the available flight time stored in the storage unit 220.

The instruction unit 240 transmits instructions to the aerial vehicle 10. The instruction unit 240 shown in Fig. 8 includes a transmission instruction unit 241. The transmission instruction unit 241 instructs the aerial vehicle 10 to transmit, to the condition monitoring device 200, a signal related to the external condition of the wind turbine 1. The transmission instruction unit 241 may instruct the aerial vehicle 10 to transmit the aforementioned signal based on a signal received by the charging information receiving unit 215. In other words, the transmission instruction unit 241 may instruct the aerial vehicle 10 to transmit the aforementioned signal upon detecting that the aerial vehicle 10 has landed on port 7.

As shown in Fig. 8, the instruction unit 240 further includes a flight instruction unit 242. The flight instruction unit 242 instructs the aerial vehicle 10 to fly. The flight instruction unit 242 may instruct the aerial vehicle 10 to fly based on the aforementioned determination result by the determination unit 230. The flight instruction unit 242 may instruct the aerial vehicle 10 to fly when the determination unit 230 determines that acquisition of the appearance information of the wind turbine 1 by the aerial vehicle 10 is necessary. That is, the flight instruction unit 242 may instruct the aerial vehicle 10 to fly based on the detection result of the sensor 70 received by the sensor receiving unit 211. Further, the flight instruction unit 242 may instruct the aerial vehicle 10 to fly when the determination unit 230 determines that flight of the aerial vehicle 10 is possible. That is, the flight instruction unit 242 may instruct the aerial vehicle 10 to fly based on a signal received by the time receiving unit 214.

The transmission unit 250 transmits signals to external units and devices. The transmission unit 250 may transmit a signal to the wind turbine control device 100 installed in the building 500. The transmission unit 250 may transmit a signal related to the wind turbine 1 to the wind turbine control device 100. As the signal related to the wind turbine 1, the transmission unit 250 may transmit, to the wind turbine control device 100, the detection result of the sensor 70 received by the sensor receiving unit 211. The transmission unit 250 may also transmit, to the wind turbine control device 100, a signal related to the external condition of the wind turbine 1 received by the appearance receiving unit 213.

The transmission unit 250 may transmit a signal related to the aerial vehicle 10 to the wind turbine control device 100. The transmission unit 250 may transmit, to the wind turbine control device 100, a signal related to the available flight time of the aerial vehicle 10, which has been received by the time receiving unit 214. The transmission unit 250 may transmit, to the wind turbine control device 100, a signal related to the position of the aerial vehicle 10 which has been received by the charging information receiving unit 215. The transmission unit 250 may transmit, to the wind turbine control device 100, a result of determination performed by the determination unit 230.

The transmission unit 250 may transmit, to at least one of the drive device 50 or the braking device 80, a signal related to control of the wind turbine 1 which has been received by the control information receiving unit 212. The transmission unit 250 may transmit a signal related to the yaw rotation of the wind turbine 1 to the yaw drive device or the yaw brake. The transmission unit 250 may transmit a signal related to the pitch rotation of the wind turbine 1 to the pitch drive device or the pitch brake.

The transmission unit 250 may transmit, to the aerial vehicle 10, a signal related to motion of the aerial vehicle 10 which has been received by the control information receiving unit 212. As the signal related to the motion of the aerial vehicle 10, the transmission unit 250 may transmit, to the aerial vehicle 10, a signal related to a flight instruction for the aerial vehicle 10.

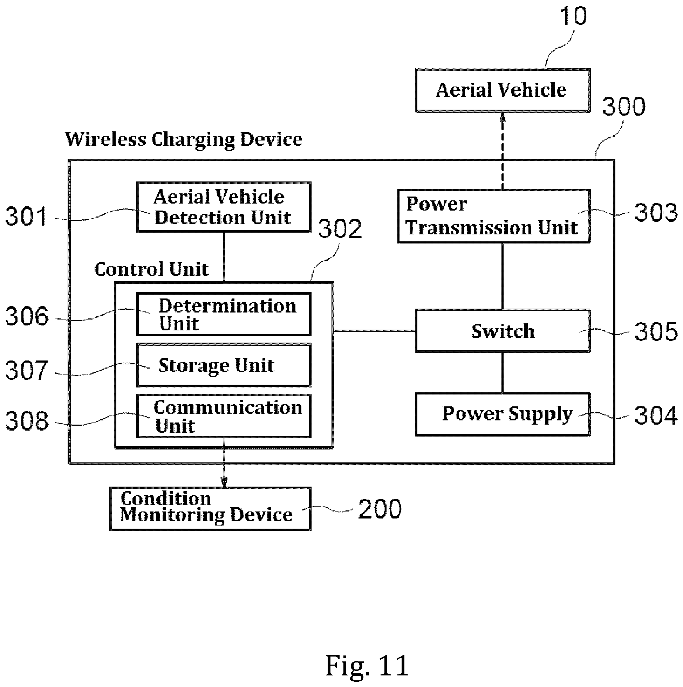

The wireless charging device 300 shown in Fig. 11 includes an aerial vehicle detection unit 301, a control unit 302, a power transmission unit 303, a power supply 304, and a switch 305. Similarly to the wind turbine control device 100 and the condition monitoring device 200, the control unit 302 is a computer. The control unit 302 has a functional configuration that includes a determination unit 306, a storage unit 307, and a communication unit 308.

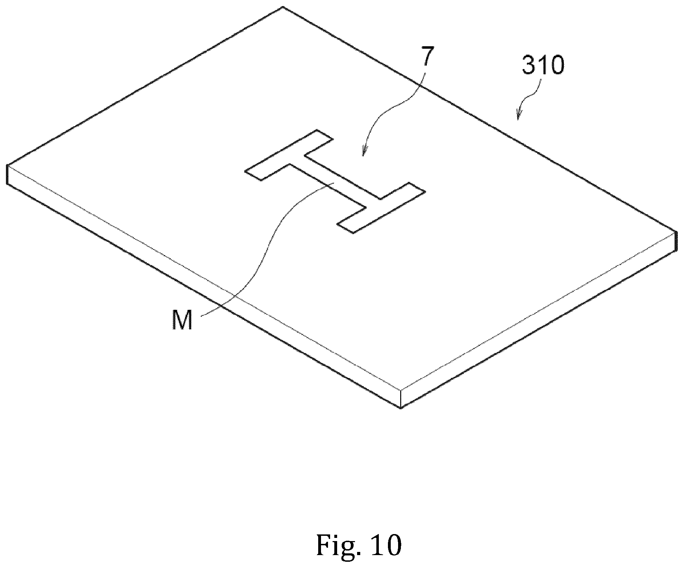

As shown in Fig. 10, the wireless charging device 300 includes a housing 310 that accommodates at least the power transmission unit 303. The illustrated wireless charging device 300 also includes the aerial vehicle detection unit 301. The housing 310 is disposed at the port 7. The housing 310 serves as a landing surface for the aerial vehicle 10 at the port 7. The housing 310 may accommodate the control unit 302, the power supply 304, and the switch 305.

The aerial vehicle detection unit 301 detects an approach of the aerial vehicle 10 to the wireless charging device 300. The aerial vehicle detection unit 301 may detect a change in load on the housing 310 caused by landing of the aerial vehicle 10 at the port 7. The aerial vehicle detection unit 301 may be a load cell that detects a load of the aerial vehicle 10 landed on the port 7.

The control unit 302 is electrically connected to the aerial vehicle detection unit 301. Through the electrical connection with the aerial vehicle detection unit 301, the load applied to the housing 310. In the control unit 302, the determination unit 306 determines whether the aerial vehicle 10 has landed on the port 7. The determination unit 306 may determine that the aerial vehicle 10 has landed on the port 7 by comparing the obtained information regarding the load applied to the housing 310 with a threshold for the load applied to the housing 310 which is stored in the storage unit 307. The determination result generated by the determination unit 306 is transmitted externally via the communication unit 308. The communication unit 308 may transmit the determination result generated by the determination unit 306 to the condition monitoring device 200.

The power transmission unit 303 supplies electric power to the aerial vehicle 10. In Figs. 6 and 11, the electric power supplied from the wireless charging device 300, and more specifically, the power transmission unit 303 to the aerial vehicle 10, is indicated by the dashed line. Electric power is supplied from the power transmission unit 303 to the aerial vehicle 10 as the power receiving unit 16 of the aerial vehicle 10 approaches the power transmission unit 303. As one example, when the charging method of the aerial vehicle 10 is an electromagnetic induction method, the power transmission unit 303 serves as a power transmission coil, and the power receiving unit 16 serves as a power receiving coil. The power transmission coil generates a magnetic field when energized. The magnetic field is emitted around the wireless charging device 300. When the power receiving unit 16 of the aerial vehicle 10 approaches the power transmission unit 303, the magnetic field passes through the power receiving coil. As the magnetic field passes through the power receiving coil, an induced current is generated in the aerial vehicle 10. In this manner, electric power is supplied from the power transmission unit 303 to the power receiving unit 16. The aerial vehicle 10 is wirelessly charged by the induced current generated in the aerial vehicle 10.

As another example, when the charging method of the aerial vehicle 10 is a capacitive coupling method, the power transmission unit 303 serves as a power transmission electrode, and the power receiving unit 16 serves as a power receiving electrode. As the power receiving unit 16 of the aerial vehicle 10 approaches the power transmission unit 303, the power transmission electrode and the power receiving electrode form a capacitor. As a result of the capacitor being formed, an electric current is generated between the power transmission unit 303 and the power receiving unit 16. In this manner, electric power is supplied from the power transmission unit 303 to the power receiving unit 16.

The power supply 304 is electrically connected to the power transmission unit 303 via a switch 305. The switch 305 switches between an energized state and a non-energized state between the power transmission unit 303 and the power supply 304. The switch 305 is electrically connected to the control unit 302. Based on the determination result of the determination unit 306 described above, the switch 305 switches the energized state between the power transmission unit 303 and the power supply 304. When the determination unit 306 detects that the aerial vehicle 10 has landed on the port 7, the switch 305 sets the state between the power transmission unit 303 and the power supply 304 to the energized state. When the determination unit 306 does not detect that the aerial vehicle 10 has landed on the port 7, the switch 305 sets the state between the power transmission unit 303 and the power supply 304 to the non-energized state.

Fig. 12 is a perspective view of the aerial vehicle 10 of Fig. 1. The aerial vehicle 10 illustrated in Fig. 12 is capable of moving in at least one of the X direction DX, the Y direction DY, or the Z direction DZ during flight. While in flight, the aerial vehicle 10 can stop its movement in at least one of the X direction DX, the Y direction DY, or the Z direction DZ in midair. A state in which the aerial vehicle 10 has stopped movement in any one of the X direction DX, the Y direction DY, or the Z direction DZ in midair may be referred to as hovering.

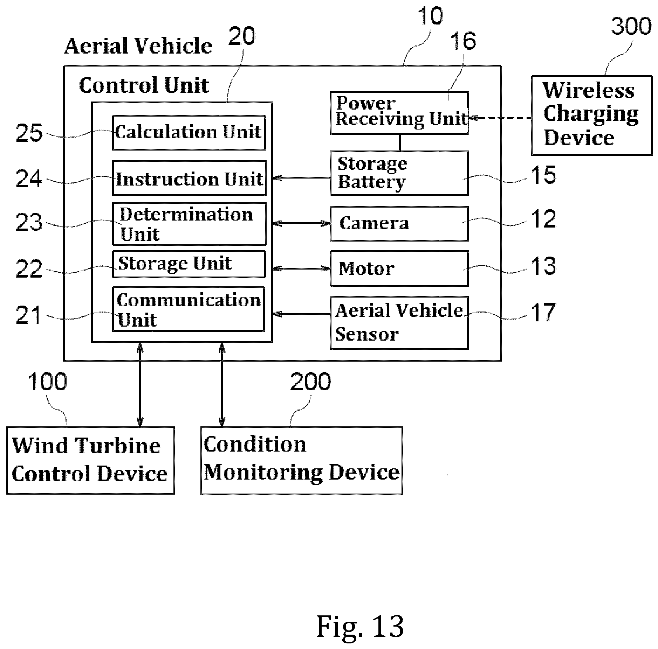

Next, the configuration of the aerial vehicle 10 will be described in greater detail, with reference to Figs. 12 and 13.

The arrows shown in Fig. 12 indicate the directions of movement of the aerial vehicle 10. In Fig. 12, the X direction DX, the Y direction DY, and the Z direction DZ are indicated by the arrows. The Y direction DY is a direction orthogonal to the X direction DX. The Z direction DZ is a direction orthogonal to both the X direction DX and the Y direction DY. In Fig. 12, the pointed end of each directional arrow represents a first side of the corresponding direction. The tail end of each directional arrow, which is not pointed, represents a second side of the corresponding direction. Movement of the aerial vehicle 10 toward the first side in the Z direction DZ during flight may be referred to as ascent. Movement of the aerial vehicle 10 toward the second side in the Z direction DZ during flight may be referred to as descent.

The aerial vehicle 10 of Fig. 12 is capable of changing its orientation while in flight, even when it stops moving in any one of the directions. The term "change in orientation" of the aerial vehicle 10 while in flight refers to an operation that does not involve displacement of the center of gravity of the aerial vehicle 10. As one example, the aerial vehicle 10 may turn around an axis parallel to the Z direction DZ while in flight. As the change of orientation, the aerial vehicle 10 may also turn around an axis parallel to the X direction DX or about an axis parallel to the Y direction DY while in flight. The turning around the axis parallel to any of the X direction DX, the Y direction DY, or the Z direction DZ may be referred to as a circular flight of the aerial vehicle 10.

The aerial vehicle 10 shown in Figs. 12 and 13 includes an aerial vehicle main body 11, and a camera 12, a motor 13, a rotor 14, the storage battery 15, the power receiving unit 16, an aerial vehicle sensor 17, and a control unit 20, which are all housed within the aerial vehicle main body 11. The control unit 20 controls the motion of the aerial vehicle 10. The motion of the aerial vehicle 10 controlled by the control unit 20 includes flight of the aerial vehicle 10. Similarly to the wind turbine control device 100 and the condition monitoring device 200, the control unit 20 is a computer. The control unit 20 includes, as functional components, a communication unit 21, a storage unit 22, a determination unit 23, an instruction unit 24, and a calculation unit 25.

In the aerial vehicle 10, the motor 13 and the storage battery 15 are electrically connected to each other. The motor 13 rotates the rotor 14 using electric power supplied from the storage battery 15. The aerial vehicle 10 flies by rotation of the rotor 14.

As shown in Fig. 12, the aerial vehicle 10 may include the two or more motors 13 and two or more rotors 14. The aerial vehicle 10 may fly by rotation of the two or more rotors 14. The aerial vehicle 10 that includes the two or more rotors 14 may be referred to as a multicopter. The aerial vehicle 10 of Fig. 12 includes the four motors 13 and four rotors 14.

The camera 12 shown in Fig. 13 is electrically connected to the control unit 20. The camera 12 captures an image of the appearance of the wind turbine 1. When the aerial vehicle 10 is in flight, the camera 12 captures an image of the exterior member 8. The camera 12 captures at least one of the tower 2, the nacelle 3, the hub 5, or the blade 6. Image data captured by the camera 12 is stored by the storage unit 22 of the control unit 20. By storing the image data captured by the camera 12 in the storage unit 22, the aerial vehicle 10 obtains the appearance information of the wind turbine 1. As described above, the appearance information of the wind turbine 1 may be an image of the exterior member 8. The camera 12 used in the aerial vehicle 10 only needs to be capable of acquiring at least one of still images or moving images through capturing.

The storage battery 15 of Fig. 13 supplies electric power to the motor 13. In addition to the motor 13, the storage battery 15 may also supply electric power to the camera 12 and the control unit 20. The storage battery 15 may be any of various types of batteries usable as secondary batteries. As one example of such batteries, the storage battery 15 may be a lithium-ion battery.

The power receiving unit 16 of Fig. 13 is electrically connected to the storage battery 15. As indicated by the broken lines in Fig. 13, the power receiving unit 16 receives electric power from the power transmission unit 303 of the wireless charging device 300. Electric power supplied to the power receiving unit 16 is stored in the storage battery 15. By storing the electric power supplied from the power receiving unit 16 in the storage battery 15, the aerial vehicle 10 is wirelessly charged. When the charging method of the aerial vehicle 10 is an electromagnetic induction method, the power receiving unit 16 is a receiving coil. When the charging method of the aerial vehicle 10 is an electromagnetic induction method, the power receiving unit 16 is a receiving electrode.

In the aerial vehicle 10 of Fig. 13, the power receiving unit 16 is attached to the lower side of the aerial vehicle main body 11. The aerial vehicle 10 lands from the power receiving unit 16. Specifically, the power receiving unit 16 of the aerial vehicle 10 may first touch port 7 when landing. As described above, when the port 7 includes the wireless charging device 300, the power receiving unit 16 of the aerial vehicle 10 may first come into contact with the wireless charging device 300 when landing on the port 7.

The aerial vehicle sensor 17 of Fig. 13 may be a sensor that detects any one of information regarding the position of the aerial vehicle 10, information regarding the orientation of the aerial vehicle 10, or information regarding the motion of the aerial vehicle 10. The aerial vehicle 10 may include the two or more aerial vehicle sensors 17. A sensor that detects the information regarding the position of the aerial vehicle 10 may be a positioning sensor utilizing GNSS (Global Navigation Satellite System). The aerial vehicle sensor 17 that detects information regarding the orientation of the aerial vehicle 10 may be an electronic compass that detects the orientation. The aerial vehicle sensor 17 that detects information regarding the motion of the aerial vehicle 10 may be an acceleration sensor that detects acceleration of the aerial vehicle 10, or a gyro sensor that detects angular velocity of the aerial vehicle 10.

The communication unit 21 shown in Fig. 13 enables wireless communication between the aerial vehicle 10 and an external device or unit. As shown in Fig. 6, the aerial vehicle 10 may perform wireless communication with the condition monitoring device 200 installed in the wind turbine 1. The aerial vehicle 10 may also perform wireless communication with the wind turbine control device 100 installed in the building 500. Wireless communication between the aerial vehicle 10 and the condition monitoring device 200 may be performed at a location where wireless communication between the aerial vehicle 10 and the wind turbine control device 100 is not possible.

The communication unit 21 may transmit the signal related to the external condition of the wind turbine 1 obtained by the aerial vehicle 10 to at least one of the wind turbine control device 100 or the condition monitoring device 200. The signal related to the external condition of the wind turbine 1 that is transmitted by the communication unit 21 may include image data captured by the camera 12.

The aerial vehicle 10 may receive the signal related to the motion of the aerial vehicle 10 from the wind turbine control device 100. The aerial vehicle 10 may initiate acquisition of the appearance information of the wind turbine 1 based on an instruction from the wind turbine control device 100. The aerial vehicle 10 may transmit the signal related to the external condition of the wind turbine 1 to the wind turbine control device 100.

The aerial vehicle 10 may receive the signal related to the motion of the aerial vehicle 10 from the condition monitoring device 200. Specifically, the aerial vehicle 10 may initiate flight and acquisition of the appearance information of the wind turbine 1 based on a flight instruction from the flight instruction unit 242. The aerial vehicle 10 may transmit the signal related to the external condition of the wind turbine 1 to the condition monitoring device 200 based on a transmission instruction from the transmission instruction unit 241.

The storage unit 22 stores the image data captured by the camera 12. The storage unit 22 may also store a program related to a flight path of the aerial vehicle 10. In the control unit 20, the stored program related to the flight path may be executed by the processor. Through such operation of the control unit 20, the aerial vehicle 10 may fly along a predetermined flight path.

The determination unit 23 performs determination relating to the operation of the aerial vehicle 10. As one example, the determination unit 23 may determine whether charging of the aerial vehicle 10 is necessary. The determination unit 23 may determine whether charging of the aerial vehicle 10 is necessary by comparing a value related to electric power stored in the storage battery 15 with a threshold regarding the electric power, the threshold is stored in the storage unit 22. The value related to the electric power stored in the storage battery 15 may be a voltage of the storage battery 15.

The determination unit 23 may determine a charging status of the aerial vehicle 10 while the aerial vehicle 10 is being charged. The determination unit 23 may determine completion of charging of the aerial vehicle 10 by comparing a signal related to the available flight time of the aerial vehicle 10 with the threshold regarding the available flight time stored in the storage unit 22.

The instruction unit 24 issues instructions to external devices and units. The instruction unit 24 may issue instructions to the components other than the control unit 20 of the aerial vehicle 10. As one example, the instruction unit 24 may instruct the camera 12 to obtain an image of the exterior member 8, based on an instruction from the wind turbine control device 100 or the condition monitoring device 200. The instruction unit 24 may issue instructions to the wind turbine 1. As another example, the instruction unit 24 may instruct activation of the wireless charging device 300, i.e., supplying power between the power transmission unit 303 and the power source 304 described above, based on a result of determination by the determination unit 23.

The calculation unit 25 calculates values related to the operation of the motor 13 in accordance with the posture to be maintained by the aerial vehicle 10, the direction in which the aerial vehicle 10 is to move, the turning direction of the aerial vehicle 10, and the like. The calculation unit 25 may calculate values related to the operation of the motor 13 based on a result of detection by the aerial vehicle sensor 17. The calculation unit 25 may calculate different current values among the two or more motors 13. The calculation unit 25 may generate the signal related to the available flight time based on the voltage of the storage battery 15.

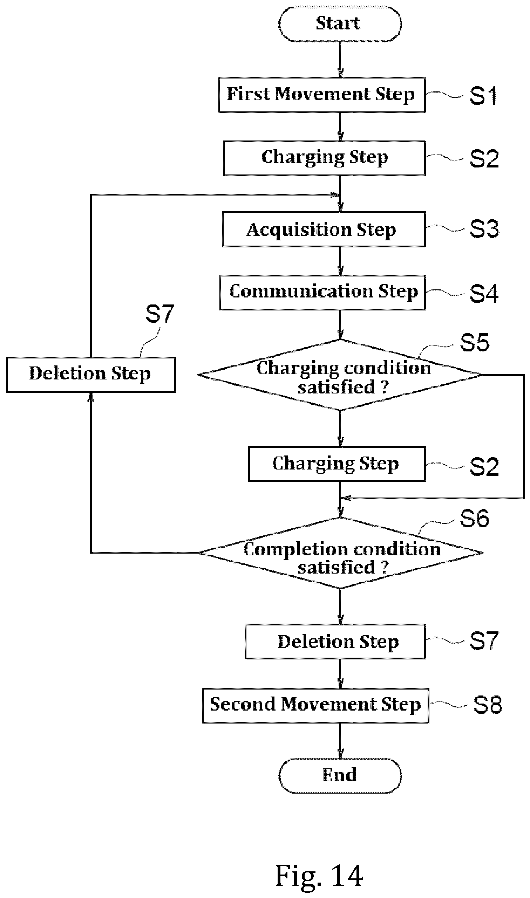

The following describes operations of the above-described wind turbine 1 and the aerial vehicle 10. Specifically, with reference to Fig. 14, a method for acquiring the condition of the wind turbine 1 by the aerial vehicle 10 will be described. The aerial vehicle 10 obtains the appearance information of the wind turbine 1 by executing the method of acquiring the condition of the wind turbine 1 shown in Fig. 14. The aerial vehicle 10 may initiate acquisition of the exterior condition of the wind turbine 1 based on an instruction from the wind turbine control device 100. The aerial vehicle 10 may also initiate acquisition of the appearance information of the wind turbine 1 based on an instruction from the condition monitoring device 200.

Fig. 14 is a flowchart of an example of the method of acquiring the condition of the wind turbine 1 by the aerial vehicle 10. Fig. 14 illustrates an example of a method of acquiring the condition of the wind turbine 1 includes: a first movement step, a charging step S2, an acquisition step S3, a communication step S4, a first determination step S5, a second determination step S6, a deletion step S7, and a second movement step S8.

In the first movement step S1, the aerial vehicle 10 moves from the parking location to the wind turbine 1. The aerial vehicle 10 of Fig. 1 moves from the building 500 toward the wind turbine 1. The first movement step S1 is completed when the aerial vehicle 10 reaches the wind turbine 1. When the aerial vehicle 10 completes the first movement step S1, the aerial vehicle 10 may be landed on the port 7.

In the charging step S2, the aerial vehicle 10 is charged by the wireless charging device 300. As described above, the aerial vehicle 10 is charged by supplying electric power from the power transmission unit 303 of the wireless charging device 300 to the power receiving unit 16 of the aerial vehicle 10. In the charging step S2, the electric power consumed during the first movement step S1 is replenished by the wireless charging device 300. In the aerial vehicle 10, when the numerical value corresponding to the electric power stored in the storage battery 15 exceeds the threshold regarding the electric power stored in the storage unit 22, the charging step S2 is completed. The completion of the charging step S2 may be determined by the determination unit 23 of the aerial vehicle 10 described above.

The aerial vehicle 10 may be charged, in the charging step S2, to a level sufficient to execute subsequent steps of the method of acquiring the condition of the wind turbine 1. In the example of Fig. 14, it is sufficient that the aerial vehicle 10 be charged, in the charging step S2, to a level enabling execution of the acquisition step S3 and the communication step S4. The aforementioned threshold regarding the electric power, which is stored in the storage unit 22, may be based on the flight time of the aerial vehicle 10 in the acquisition step S3 and the power consumption of the storage battery 15 in the communication step S4.

In the charging step S2, the aerial vehicle 10 is charged at a position where charging by the wireless charging device 300 is possible. In the charging step S2, the aerial vehicle 10 may move to the position where charging by the wireless charging device 300 is possible. The aerial vehicle 10 may be charged by the wireless charging device 300 while landed on the port 7. In the charging step S2, the aerial vehicle 10 may be charged while the aerial vehicle 10 stops flying. In the charging step S2, the aerial vehicle 10 may be charged while in flight.

In the acquisition step S3, the aerial vehicle 10 obtains the appearance information of the wind turbine 1. In the acquisition step S3, the aerial vehicle 10 flies around the wind turbine 1. In the acquisition step S3, as described above, the aerial vehicle 10 may obtain an image of the exterior member 8 as the appearance information of the wind turbine 1. In the acquisition step S3, the aerial vehicle 10 may capture an image of the exterior member 8 using the camera 12. The image of the exterior member 8 may be stored in the storage unit of the aerial vehicle 10.

The aerial vehicle 10 may execute the acquisition step S3 by executing a program via the control unit 20. The flight path of the aerial vehicle 10 in the acquisition step S3 may be stored in advance in the storage unit 22 as a program. Upon completion of the program execution by the control unit 20, the aerial vehicle 10 may complete the acquisition step S3. The aerial vehicle 10 may complete the acquisition step S3 at a position where wireless communication with the condition monitoring device 200 is possible. The aerial vehicle 10 may complete the acquisition step S3 when landed on the port 7.

As described above, landing of the aerial vehicle 10 on the port 7 is detected by the aerial vehicle detection unit 301 and the determination unit 306 of the wireless charging device 300. A result of the determination by the determination unit 306 may be transmitted from the communication unit 308 of the wireless charging device 300 to the condition monitoring device 200. The condition monitoring device 200 may receive, at the charging information receiving unit 215, the determination result from the determination unit 306 regarding the landing of the aerial vehicle 10 as information related to the position of the aerial vehicle 10.

In the communication step S4, the aerial vehicle 10 performs wireless communication with external devices and units. In the communication step S4, the aerial vehicle 10 may perform wireless communication with the wind turbine control device 100. In the communication step S4, the aerial vehicle 10 may perform wireless communication with the condition monitoring device 200. In the communication step S4, the condition monitoring device 200 and the wind turbine 1 in which the condition monitoring device 200 is provided are situated closer to the aerial vehicle 10 than the wind turbine control device 100. Wireless communication between the aerial vehicle 10 and the condition monitoring device 200 may have a stabler communication environment than wireless communication between the aerial vehicle 10 and the wind turbine control device 100.

In the communication step S4, the aerial vehicle 10 may transmit a signal related to the external condition of the wind turbine 1 to an external devices and units. The aerial vehicle 10 may transmit the signal related to the external condition of the wind turbine 1 to the condition monitoring device 200, based on an instruction from the transmission instruction unit 241 described above. The transmission instruction unit 241 may instruct the aerial vehicle 10 to transmit the signal related to the external condition of the wind turbine 1 when the aerial vehicle 10 is landed on the port 7. The landing of the aerial vehicle 10 on the port 7 may be detected by the condition monitoring device 200 through reception, by the charging information receiving unit 215, of the result of determination from the determination unit 306 described above.

In the wireless communication between the aerial vehicle 10 and the condition monitoring device 200 in the communication step S4, the appearance receiving unit 213 receives, from the aerial vehicle 10, the signal related to the external condition of the wind turbine 1. The time receiving unit 214 receives the signal related to the available flight time from the aerial vehicle 10.

The first determination step S5 is a step for determining whether charging of the aerial vehicle 10 is necessary. The first determination step S5 may be executed in the wind turbine 1 or in the aerial vehicle 10. When the first determination step S5 is executed in the wind turbine 1, the determination unit 230 of the condition monitoring device 200 determines whether charging of the aerial vehicle 10 is necessary. When the first determination step S5 is executed in the aerial vehicle 10, the determination unit 23 of the control unit 20 determines whether charging of the aerial vehicle 10 is necessary. In the first determination step S5, when the determination unit 23 or the determination unit 230 determines that charging of the aerial vehicle 10 is necessary, the aerial vehicle 10 satisfies a charging necessary condition. In the first determination step S5, when the determination unit 23 or the determination unit 230 determines that charging of the aerial vehicle 10 is unnecessary, the aerial vehicle 10 does not satisfy the charging necessary condition.

When the aerial vehicle 10 is determined to satisfy the charging necessary condition, the aforementioned charging step S2 is executed again. When the aerial vehicle 10 is determined to satisfy the charging necessary condition, the method of acquiring the condition of the wind turbine 1 is performed in the order of the first determination step S5, the charging step S2, and the second determination step S6. When the aerial vehicle 10 is determined not to satisfy the charging necessary condition, the charging step S2 is not executed again. When the aerial vehicle 10 is determined not to satisfy the charging necessary condition, the method of acquiring the condition of the wind turbine 1 is performed in the order of the first determination step S5 and the second determination step S6.

The charging step S2 executed prior to the acquisition step S3 may be referred to as a "pre-acquisition charging step." The charging step S2 executed after the acquisition step S3 may be referred to as a "post-acquisition charging step."

The second determination step S6 is a step for determining whether a completion condition for the method of acquiring the condition of the wind turbine 1 has been satisfied. The second determination step S6 may be executed in the wind turbine 1. When the second determination step S6 is executed in the wind turbine 1, the determination unit 230 of the condition monitoring device 200 determines whether the method of acquiring the condition of the wind turbine 1 has been completed. The completion condition for the method of acquiring the condition of the wind turbine 1 may be satisfied when at least one of the following conditions (A) or (B) is satisfied: (A) acquisition of the appearance information of the wind turbine 1 is not instructed by the flight instruction unit 242; or (B) Movement to the parking location is instructed by the flight instruction unit 242. When it is determined that the completion condition has been satisfied, the method proceeds to the second movement step S8. When it is determined that the completion condition has not been satisfied, the acquisition step S3, communication step S4, and first determination step S5 described above are repeated.

As shown in Fig. 14, the method of acquiring the condition of the wind turbine 1 may include a deletion step S7. The deletion step S7 is executed between the second determination step S6 and the second movement step S8, and between the second determination step S6 and the acquisition step S3. In the deletion step S7, the appearance information of the wind turbine 1, which has been obtained in the aforementioned acquisition step S3 and stored in the storage unit 22, is deleted from the storage unit 22. By including the deletion step S7 in the method of acquiring the condition of the wind turbine 1, it becomes possible to increase capacity in the storage unit 22 for storing the appearance information of the wind turbine 1 after completion of the acquisition step S3 or after completion of the condition acquiring method.

In the second movement step S8, the aerial vehicle 10 moves from the wind turbine 1 to the parking location. The aerial vehicle 10 of Fig. 1 moves from the wind turbine 1 toward the building 500. When the aerial vehicle 10 reaches the building 500, the second movement step S8 is completed. Upon completion of the second movement step S8, the method of acquiring the condition of the wind turbine 1 shown in Fig. 14 is completed.

In the embodiment described above, the wind turbine 1 includes the tower 2, the nacelle 3 rotatably supported by the tower 2, and the wireless charging device 300 provided in the nacelle 3 for charging the aerial vehicle 10. In the embodiment described above, the wind turbine management system 400 includes the condition monitoring device 200 for monitoring the condition of the wind turbine 1, and the wireless charging device 300 provided in the nacelle 3 of the wind turbine 1 for charging the aerial vehicle 10. With this configuration, once the aerial vehicle 10 has moved from the parking location to the wind turbine 1, the aerial vehicle 10 can be charged by the wireless charging device 300. The wireless charging device 300 can extend the available flight time of the aerial vehicle 10. Furthermore, wireless charging of the aerial vehicle 10 enables the aerial vehicle 10 to be easily charged even in unmanned environments. As a result, the wind turbine 1 can improve the efficiency of information acquisition by the aerial vehicle 10.

In the embodiment described above, the nacelle 3 is provided with the port 7 for the aerial vehicle 10 to land on. The wireless charging device 300 charges the aerial vehicle 10 that has landed on the port 7. According to the embodiment, the aerial vehicle 10 can easily land on the port 7 from above. As a result, the aerial vehicle 10 that has landed on the port 7 can be charged in a stable position by the wireless charging device 300.

In the embodiment described above, the port 7 is disposed in the overlapping portion 3M where the nacelle 3 and the tower 2 overlap when the wind turbine 1 is observed from the axial direction parallel to the rotational axis (first axis AX1) of the nacelle 3 relative to the tower 2. According to the embodiment, the position of the port 7 remains the same regardless of the rotational state of the nacelle 3 relative to the tower 2. As a result, the aerial vehicle 10 can easily land on the port 7 regardless of the rotational state of the nacelle 3 relative to the tower 2. However, the position of the port 7 is not limited to the example described above and may be disposed on a portion other than the overlapping portion 3M.

In the embodiment described above, the port 7 is provided in the recess 3Y in the nacelle 3. According to the embodiment, the aerial vehicle 10 lands on the port 7 disposed within the recess 3Y. Within the recess 3Y, the aerial vehicle 10 can be protected from external environmental factors such as wind blowing against the wind turbine 1 and so prevented from moving in the horizontal direction relative to the wind turbine 1. As a result, the aerial vehicle 10 that has landed on the port 7 can be charged in a more stable condition by the wireless charging device 300.

In the embodiment described above, the wind turbine 1 includes the appearance receiving unit 213 that receives the signal related to the external condition of the wind turbine 1. In the embodiment described above, the condition monitoring device 200 of the wind turbine management system 400 includes the appearance receiving unit 213 that receives the signal related to the external condition of the wind turbine 1. With these configurations, the wind turbine 1 can acquire the appearance information of the wind turbine 1 at an early stage, prior to the return of the aerial vehicle 10 to the parking location. As a result, for example, even if the aerial vehicle 10 is lost during movement from the wind turbine 1 to the parking location, it is possible to avoid loss of the acquired appearance information of the wind turbine 1.

In the embodiment described above, the wind turbine 1 includes the transmission unit 250 that transmits the signal received by the appearance receiving unit 213. In the embodiment described above, the condition monitoring device 200 of the wind turbine management system 400 includes the transmission unit 250 that transmits the signal received by the appearance receiving unit 213. With these configurations, the signal related to the external condition of the wind turbine 1 can be transmitted externally from the wind turbine 1 or the wind turbine management system 400, instead of being transmitted from the aerial vehicle 10. As a result, even when the wind turbine 1 is situated at a distance from the parking location of the aerial vehicle 10 that exceeds the maximum transmission range of the aerial vehicle 10, the signal related to the external condition of the wind turbine 1 can still be transmitted externally.

In the embodiment described above, the wind turbine 1 further includes the sensor 70 that detects the operation of the wind turbine 1, and the sensor receiving unit 211 that receives the signal related to a result of the detection from the sensor 70. The transmission unit 250 transmits the signal received by the appearance receiving unit 213 and the signal received by the sensor receiving unit 211. In the embodiment described above, the wind turbine management system 400 further includes the sensor 70 that detects the operation of the wind turbine 1. The condition monitoring device 200 further includes the sensor receiving unit 211 that receives the signal related to the detection result from the sensor 70. The transmission unit 250 transmits the signal received by the appearance receiving unit 213 and the signal received by the sensor receiving unit 211. With these configurations, the wind turbine 1 or the wind turbine management system 400 can transmit the signal related to the external condition of the wind turbine 1 to the outside by utilizing equipment that transmits the signal related to the detection result of the sensor 70. In the wind turbine 1 that is already provided with the equipment for transmitting the signal related to the detection result of the sensor 70, it is possible to avoid additional installation for transmitting information acquired by the aerial vehicle 10.

In the embodiment described above, the wind turbine 1 further includes the appearance receiving unit 213 that receives the signal related to the external condition of the wind turbine 1, and the transmission instruction unit 241 that instructs the aerial vehicle 10 to transmit the signal related to the external condition of the wind turbine 1 to the wind turbine 1. The transmission instruction unit 241 instructs the aerial vehicle 10 to transmit the signal related to the external condition of the wind turbine 1 to the wind turbine 1 when the aerial vehicle 10 is landed on the port 7. With this configuration, the wind turbine 1 can acquire the appearance information of the wind turbine 1 from the aerial vehicle 10 that is being charged by the wireless charging device 300 at the port 7. In other words, the wind turbine 1 can avoid acquiring the appearance information of the wind turbine 1 from the aerial vehicle 10 that is not being charged by the wireless charging device 300 at the port 7. According to this configuration, when two or more aerial vehicles 10 have acquired the appearance information of different wind turbines 1, the wind turbine 1 can avoid erroneously acquiring the appearance information of a different wind turbine 1 from an aerial vehicle 10 other than the one that has landed on the port 7. Therefore, this embodiment is particularly suitable in cases where the appearance information of the two or more wind turbines 1 is acquired by the two or more aerial vehicles 10.

In the embodiment described above, the wind turbine 1 further includes the time receiving unit 214 that receives the signal related to the available flight time from the aerial vehicle 10, and the flight instruction unit 242 that instructs the aerial vehicle 10 to fly. The flight instruction unit 242 instructs the aerial vehicle 10 to fly based on the signal received by the time receiving unit 214. In the embodiment described above, the condition monitoring device 200 of the wind turbine management system 400 further includes the time receiving unit 214 that receives the signal related to the available flight time from the aerial vehicle 10, and the flight instruction unit 242 that instructs the aerial vehicle 10 to fly. The flight instruction unit 242 instructs the aerial vehicle 10 to fly based on the signal received by the time receiving unit 214. With these configurations, the flight instruction unit 242 can instruct the aerial vehicle 10 to fly in accordance with information regarding the available flight time of the aerial vehicle 10. For example, when the available flight time of the aerial vehicle 10 is sufficiently long, the flight instruction unit 242 can promptly instruct the aerial vehicle 10 to fly. Whereas when the available flight time of the aerial vehicle 10 is short, the flight instruction unit 242 can instruct the aerial vehicle 10 to fly after a period of time has elapsed for charging by the wireless charging device 300.

In the embodiment described above, the wind turbine 1 further includes, in addition to the aforementioned time receiving unit 214 and flight instruction unit 242, the sensor 70 that detects the operation of the wind turbine 1, and the sensor receiving unit 211 that receives the signal related to the detection result from the sensor 70. The flight instruction unit 242 instructs the aerial vehicle 10 to fly based on the signal received by the sensor receiving unit 211. In the embodiment described above, the wind turbine management system 400 further includes the sensor 70 that detects the operation of the wind turbine 1. The condition monitoring device 200 includes the sensor receiving unit 211 that receives the signal related to the detection result from the sensor 70. The flight instruction unit 242 instructs the aerial vehicle 10 to fly based on the signal received by the sensor receiving unit 211. With these embodiments, the aerial vehicle 10 can acquire information regarding the exterior member 8 suspected of deterioration, based on the signal received by the sensor receiving unit 211.

While the foregoing has described the embodiment with reference to specific examples, these specific examples do not limit the embodiment. The foregoing embodiment can be implemented in various other specific forms and is susceptible to omission, replacement, modification. and addition of various elements thereof within the purport of the invention.

The wind turbine control device 100 described above was installed in the building 500. Alternatively, the wind turbine control device 100 may be installed in the wind turbine 1.

In the wind turbine 1 described above, the port 7 for landing of the aerial vehicle 10 is provided in the recess 3Y formed in the top surface 3X of the nacelle 3. Alternatively, the recess 3Y need not be provided in the top surface 3X of the nacelle 3 where the port 7 is located. In this case, the port 7 may be surrounded by a fence on the top surface 3X that does not have the recess 3Y.

The condition monitoring device 200 described above is installed in the wind turbine 1. Alternatively, the condition monitoring device 200 is not limited thereto and may be installed at a location remote from the wind turbine 1. As one example, it may be installed in the building 500. The wind turbine management system 400 may include the condition monitoring device 200 installed in the building 500 and the wireless charging device 300 installed in the wind turbine 1.

In the method of acquiring the condition of the wind turbine 1 described above, the aerial vehicle 10 is charged by the wireless charging device 300 after completion of the first movement step S1, without determining whether charging of the aerial vehicle 10 is necessary. Alternatively, the invention is not limited thereto, and the determination as to whether charging of the aerial vehicle 10 is necessary may be made after completion of the first movement step S1. The aerial vehicle 10 may be charged by the wireless charging device 300 after the acquisition step S3, without determining whether charging of the aerial vehicle 10 is necessary. In the method of acquiring the condition of the wind turbine 1, it is sufficient that the aerial vehicle 10 be charged by the wireless charging device 300 at least once.

The foregoing embodiments disclosed herein describe a plurality of physically separate constituent parts. They may be combined into a single part, and any one of them may be divided into a plurality of physically separate constituent parts. Irrespective of whether or not the constituent parts are integrated, they are acceptable as long as they are configured to attain the object of the invention.

According to the foregoing embodiments disclosed herein, a plurality of functions may be distributively provided. Some or all of these functions may be integrally provided. Conversely, a different plurality of functions may be integrally provided. Some or all of these functions can be distributively provided. Irrespective of whether the functions are integrated or distributed, they are acceptable as long as they are configured to attain the object of the invention.

## Claims

1. A wind turbine comprising:
a tower;
a nacelle rotatably supported on the tower; and
a wireless charging device provided in the nacelle for charging an aerial vehicle.

2. The wind turbine of claim 1, wherein the nacelle is provided with a port for the aerial vehicle to land, and
wherein the wireless charging device charges the aerial vehicle that has landed on the port.

3. The wind turbine of claim 2, wherein the port is disposed in a portion of the nacelle where the nacelle and the tower overlap when the wind turbine is observed from an axial direction parallel to a rotational axis of the nacelle relative to the tower.

4. The wind turbine of claim 2 or 3, wherein the port is disposed in a recess formed in the nacelle.

5. The wind turbine of any one of claims 1 to 4, further comprising an appearance receiving unit receiving a signal related to an external condition of the wind turbine from the aerial vehicle.

6. The wind turbine of claim 5 further comprising a transmission unit transmitting the signal received by the appearance receiving unit.

7. The wind turbine of claim 6 further comprising:
a sensor detecting an operation of the wind turbine; and
a sensor receiving unit receiving a signal related to a detection result from the sensor,
wherein the transmission unit transmits the signal received by the appearance receiving unit and the signal received by the sensor receiving unit.

8. The wind turbine of any one of claims 5 to 7, further comprising a transmission instruction unit instructing the aerial vehicle to transmit, to the wind turbine, the signal related to the external condition of the wind turbine.

9. The wind turbine of any one of claims 2 to 4, further comprising:
an appearance receiving unit receiving, from the aerial vehicle, a signal related to an external condition of the wind turbine; and
a transmission instruction unit instructing the aerial vehicle to transmit, to the wind turbine, the signal related to the external condition of the wind turbine,
wherein the transmission instruction unit instructs the aerial vehicle to transmit the signal related to the external condition of the wind turbine to the wind turbine when the aerial vehicle is landed on the port.

10. The wind turbine of any one of claims 1 to 9, further comprising:
a time receiving unit receiving, from the aerial vehicle, a signal related to an available flight time; and
a flight instruction unit instructing the aerial vehicle to fly,
wherein the flight instruction unit instructs the aerial vehicle to fly based on the signal received by the time receiving unit.

11. The wind turbine of claim 10 further comprising:
a sensor detecting an operation of the wind turbine; and
a sensor receiving unit receiving a signal regarding a detection result from the sensor,
wherein the flight instruction unit instructs the aerial vehicle to fly based on the signal received by the sensor receiving unit.

12. A method of acquiring the condition of the wind turbine of any one of claims 1 to 11, the method comprising:
a charging step of charging the aerial vehicle by the wireless charging device; and
an acquisition step of acquiring information regarding the wind turbine by the aerial vehicle.

13. The method of claim 12, wherein the aerial vehicle includes a storage unit for storing information regarding an appearance of the wind turbine in the acquisition step,
the method further comprising:
a communication step of transmitting the information regarding the appearance stored in the storage unit after the acquisition step; and
a deletion step of deleting the information regarding the appearance from the storage unit.

14. A wind turbine management system comprising:
a condition monitoring device for monitoring a condition of a wind turbine; and
a wireless charging device provided in a nacelle of the wind turbine for charging an aerial vehicle.

15. The wind turbine management system of claim 14, wherein the condition monitoring device includes an appearance receiving unit receiving a signal related to an external condition of the wind turbine from the aerial vehicle.

16. The wind turbine management system of claim 15, wherein the condition monitoring device includes a transmission unit transmitting the signal received by the appearance receiving unit.

17. The wind turbine management system of claim 16, further comprising a sensor detecting an operation of the wind turbine,
wherein the condition monitoring device includes a sensor receiving unit receiving a signal related to a detection result from the sensor,
wherein the transmission unit transmits the signal received by the appearance receiving unit and the signal received by the sensor receiving unit.

18. The wind turbine management system of any one of claims 15 to 17, wherein the condition monitoring device includes a transmission instruction unit that instructs the aerial vehicle to transmit the signal related to an external condition of the wind turbine to the wind turbine.

19. The wind turbine management system of any one of claims 14 to 18, wherein the condition monitoring device includes a time receiving unit receiving, from the aerial vehicle, a signal related to an available flight time; and a flight instruction unit instructing the aerial vehicle to fly,
wherein the flight instruction unit instructs the aerial vehicle to fly based on the signal received by the time receiving unit.

20. The wind turbine management system of claim 19, further comprising a sensor detecting an operation of the wind turbine,
wherein the condition monitoring device includes a sensor receiving unit that receives a signal related to a detection result from the sensor,
wherein the flight instruction unit instructs the aerial vehicle to fly based on the signal received by the sensor receiving unit.
